(19) Europäisches Patentamt / European Patent Office / Office européen des brevets

(11) **EP 4 152 682 B1**

(12) **FASCICULE DE BREVET EUROPEEN**

(45) Date de publication et mention
de la délivrance du brevet:
**19.11.2025 Bulletin 2025/47**

(21) Numéro de dépôt: **22191581.2**

(22) Date de dépôt: **22.08.2022**

(51) Classification Internationale des Brevets (IPC):
**H04L 9/00** (2022.01)    **H04L 9/30** (2006.01)
**G06F 21/75** (2013.01)    **G09C 1/00** (2006.01)
**G06F 7/72** (2006.01)

(52) Classification Coopérative des Brevets (CPC):
**H04L 9/003; G06F 7/725; G06F 21/755;
G09C 1/00; H04L 9/3066;** G06F 2207/7219;
G06F 2207/7257; G06F 2207/7266;
G06F 2221/2123

(54) **PROTECTION D'UNE OPÉRATION CRYPTOGRAPHIQUE METTANT EN OEUVRE DES COURBES ELLIPTIQUES AU MOYEN D'OPERATIONS FACTICES**

SCHUTZ EINES KRYPTOGRAFISCHEN OPERATION MIT ELLIPTISCHEN KURVEN DURCH DUMMY-OPERATIONEN

PROTECTION FOR A CRYPTOGRAPHIC OPERATION INVOLVING ELLIPTIC CURVES BY MEANS OF DUMMY OPERATIONS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **31.08.2021 FR 2109096**

(43) Date de publication de la demande:
**22.03.2023 Bulletin 2023/12**

(73) Titulaire: **STMicroelectronics (Rousset) SAS
13790 Rousset (FR)**

(72) Inventeur: **ASSAEL, Guilhem
83910 POURRIERES (FR)**

(74) Mandataire: **Cabinet Beaumont
4, Place Robert Schuman
B.P. 1529
38025 Grenoble Cedex 1 (FR)**

(56) Documents cités:
US-A1- 2012 008 780

- PONTIE SIMON ET AL: "An Elliptic Curve Crypto-Processor Secured by Randomized Windows", 2014 17TH EUROMICRO CONFERENCE ON DIGITAL SYSTEM DESIGN, IEEE, 27 August 2014 (2014-08-27), pages 535 - 542, XP032665180, DOI: 10.1109/DSD.2014.18

- PONTIE SIMON ET AL: "Dummy operations in scalar multiplication over elliptic curves: A tradeoff between security and performance", MICROPROCESSORS AND MICROSYSTEMS., vol. 47, 1 November 2016 (2016-11-01), GB, pages 23 - 36, XP093019538, ISSN: 0141-9331, DOI: 10.1016/j.micpro.2016.02.016

- LARS ELMEGAARD-FESSEL: "Efficient Scalar Multiplication and Security against Power Analysis in Cryptosystems based on the NIST Elliptic Curves Over Prime Fields", THESE DE DOCTORAT PRESENT�E AU D�PARTEMENT DE CHIMIE DE L'UNIVERSIT� DE LAUSANNE POUR L'OBTENTION DU GRADE DE DOCTEUR �S SCIENCES,, 1 August 2006 (2006-08-01), XP007906551

- ABDULRAHMAN EBRAHIM A H ET AL: "New Regular Radix-8 Scheme for Elliptic Curve Scalar Multiplication without Pre-Computation", IEEE TRANSACTIONS ON COMPUTERS, IEEE, USA, vol. 64, no. 2, 1 February 2015 (2015-02-01), pages 438 - 451, XP011569826, ISSN: 0018-9340, [retrieved on 20150112], DOI: 10.1109/TC.2013.213

• SIMON PONTIE ET AL: "Dummy operations in scalar multiplication over elliptic curves: A tradeoff between security and performance", MICROPROCESSORS AND MICROSYSTEMS, 1 January 2014 (2014-01-01), pages 23 - 36, XP055532448, Retrieved from the Internet <URL:http://www.lbd.dcc.ufmg.br/colecoes/ sbseg/2014/0010.pdf> DOI: 10.1016/ j.micpro.2016.02.016

**Description**

Domaine technique

La présente description concerne de façon générale le domaine de la cryptographie et en particulier le domaine de la cryptographie sur des courbes elliptiques ou similaire.

Technique antérieure

La cryptographie sur des courbes elliptiques (ECC, Elliptic Curve Cryptography) est bien adaptée aux méthodes de cryptographie à clef publique car elle permet l'utilisation de clefs de chiffrement de taille réduite.
Toutefois, une attaque par analyse de consommation (SPA, Simple Power Analysis) menée lors d'une opération cryptographique faisant intervenir la clef de chiffrement, peut permettre à une entité extérieure de déduire la valeur de la clef de chiffrement dans une méthode de cryptographie basée sur des courbes elliptiques, entre autres.
Il est souhaitable de rendre la valeur de la clef de chiffrement difficilement détectable lors de l'exécution, par un dispositif électronique, d'opérations cryptographiques la faisant intervenir.
Le document de Pontie et Al. "An Elliptic Curve Crypto-Processor Secured by Randomized Windows", publié le 27 août 2014 dans « 17TH EUROMICRO CONFERENCE ON DIGITAL SYSTEM DESIGN, IEEE », décrit un algorithme de chiffrement sur des courbes elliptiques basé sur une méthode de fenêtres aléatoires. Le document US 2012/008780 décrit un procédé de multiplication par un scalaire sur des courbes elliptiques. La thèse de doctorat présentée au département de chimie de l'université de Lausanne pour le grade de docteur ès sciences par Lars Elmegaard-Fessel "Efficient Scalar Multiplication and Security against Power Analysis in Cryptosystems based on the NIST Elliptic Curves Over Prime Fields", le 1er août 2006, décrit des algorithmes de multiplication par un scalaire sur des courbes elliptiques de type NIST. Le document de Abdulrahman Ebrahim A H et Al. "New Regular Radix-8 Scheme for Elliptic Curve Scalar Multiplication without Pre-Computation", publié le 1er février 2015 dans « IEEE TRANSACTIONS ON COMPUTERS, IEEE, USA » décrit des algorithmes de multiplication par un scalaire sur des courbes elliptiques ne nécessitant pas de pré-calcul.

Résumé de l'invention

Il existe un besoin d'améliorer la protection de la valeur d'une clef de chiffrement utilisée lors d'opérations cryptographiques sur courbes elliptiques.
Un mode de réalisation pallie tout ou partie des inconvénients des procédés connus de protection de la valeur d'une clef de chiffrement utilisé lors d'opérations cryptographiques sur courbes elliptiques.
Un mode de réalisation prévoit un procédé cryptographique comprenant :
la multiplication d'un point appartenant à un ensemble mathématique ayant une structure de groupe par un scalaire en faisant :

- le découpage d'un scalaire en une pluralité de groupes composés d'un même nombre w de chiffres, w étant supérieur ou égal à 2 ; et
- l'exécution, par un circuit cryptographique et pour chaque groupe de chiffres, d'une séquence d'opérations sur le point, la séquence d'opérations étant identique pour chaque groupe de chiffres, au moins une des opérations exécutées pour chacun des groupes de chiffres étant une opération factice.

Un mode de réalisation prévoit un circuit cryptographique pour réaliser une multiplication d'un point appartenant à un ensemble mathématique ayant une structure de groupe par un scalaire, le circuit cryptographique étant configuré pour :

- découper le scalaire en une pluralité de groupes composés d'un même nombre w de chiffres, w étant supérieur ou égal à 2 ;
- exécuter, pour chaque groupe de chiffres, une séquence d'opérations au point, la séquence d'opérations étant identique pour chaque groupe de chiffres, au moins une des opérations exécutées pour chacun des groupes de chiffres étant une opération factice.

Selon un mode de réalisation, la séquence d'opérations consiste en :

a) l'exécution, w fois, d'une première opération ;
b) l'exécution d'une deuxième opération ; et

c) l'exécution, (w-1) fois, de la première opération.

Selon un mode de réalisation, la séquence d'opérations consiste en l'opération a) suivie par l'opération b) suivie par l'opération c)

Selon un mode de réalisation, la première opération est une opération de doublement et la deuxième opération est une opération d'addition.

Selon un mode de réalisation, le circuit cryptographique est configuré pour modifier une valeur courante d'un résultat intermédiaire de la multiplication suite à chaque opération non factice et pour ne pas modifier cette valeur courante suite à chaque opération factice.

Selon un mode de réalisation, pour chaque opération factice, le circuit cryptographique est configuré pour modifier une valeur courante d'un résultat intermédiaire de la multiplication en une valeur différente mais mathématiquement équivalente.

Selon un mode de réalisation, le procédé ou le circuit comprend en outre comprenant en outre, avant le découpage en une pluralité de groupes de chiffres, le recodage du scalaire sous une forme non adjacente fenestrée de paramètre w.

Selon un mode de réalisation, l'ensemble mathématique est une courbe elliptique ou une courbe hyperelliptique.

Selon un mode de réalisation, la courbe est une courbe de Koblitz définie par un ensemble de points et ayant la forme suivante :

[Math 1]

$$\{(x, y) \in K \times K : y^2 + xy = x^3 + ax^2 + 1\}$$

où **a** vaut 0 ou 1 et $K$ est un corps fini binaire.

Selon un mode de réalisation, l'opération de doublement est un endomorphisme de Frobenius.

Selon un mode de réalisation, le procédé ou le circuit comprend en outre, avant l'exécution de la séquence d'opérations sur le point, le calcul et le stockage dans une mémoire du circuit d'une pluralité de multiples dudit point.

Un mode de réalisation prévoit une mémoire non transitoire stockant des instructions pour la mise en œuvre du procédé lorsque ces instructions sont exécutées par un processeur cryptographique.

Un mode de réalisation prévoit un dispositif électronique comprenant un circuit cryptographique configuré pour la mise en œuvre du procédé.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un exemple d'un dispositif électronique du type auquel s'appliquent les modes de réalisation décrits ;

la figure 2 est un graphique illustrant un exemple de consommation électrique du dispositif illustré en figure 1 lors d'une opération cryptographique sans mise en œuvre d'une protection de la clef de chiffrement ;

la figure 3 est un tableau présentant un exemple d'insertion d'opérations cryptographiques factices ;

la figure 4 est un organigramme illustrant des opérations d'un procédé de mise en œuvre d'une opération cryptographique selon un mode de réalisation ;

la figure 5 est un organigramme illustrant des opérations d'un procédé de mise en œuvre d'une opération cryptographique selon un autre mode de réalisation ; et

la figure 6 représente de façon schématique un circuit de calcul selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les représentations d'un scalaire sous formes non adjacentes fenestrées ainsi que les opérations de doublement, d'addition ou de Frobenius sur des courbes elliptiques ne sont pas décrites en détails.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

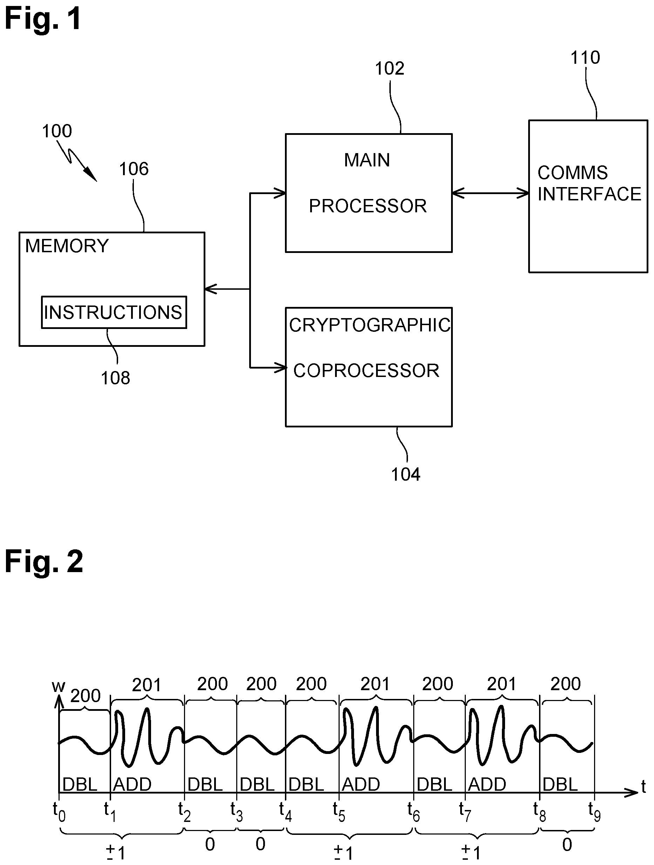

La figure 1 illustre schématiquement un dispositif 100 selon un mode de réalisation. Le dispositif 100 est par exemple un ordinateur, un téléphone mobile ou encore une carte à puce.

Le dispositif 100 comprend, par exemple un processeur principal 102 (MAIN PROCESSOR), qui est par exemple un processeur hôte du dispositif 100 et un coprocesseur cryptographique 104 (CRYPTOGRAPHIC COPROCESSOR). Le dispositif 100 comprend en outre une mémoire 106 (MEMORY) stockant des instructions 108 (INSTRUCTIONS) de commande du processeur principal 102 et du coprocesseur cryptographique 104. Une interface de communication 110 (COMMUNICATIONS INTERFACE) est, par exemple, couplée au processeur principal 102, et permet, par exemple, des communications sans fil par l'intermédiaire d'un réseau de communication sans fil, et/ou des communications filaires, par exemple par un LAN (de l'anglais "Local Area Network" - réseau local, non illustré).

Le dispositif 100, et notamment le coprocesseur cryptographique 104, est par exemple adapté à réaliser des opérations cryptographiques sur des courbes elliptiques. En particulier, le coprocesseur cryptographique 104 est par exemple configuré pour effectuer une multiplication par un scalaire k d'un point P appartenant à une courbe elliptique E ayant la forme :

[Math 1]

$$E := \{(x, y) \in K \times K; y^2 + a_1 xy + a_3 y = x^3 + a_2 x^2 + a_4 x + a_6\},$$

où K est un corps fini, par exemple K = Z/pZ avec p un nombre premier ou une puissance d'un nombre premier et les coefficients $a_1, a_2, a_3, a_4$ et $a_6$ appartiennent au corps K. Dans un autre exemple, le point P appartient à une courbe hyperelliptique, ou à un quelconque ensemble mathématique ayant une structure de groupe, pour laquelle l'addition et la soustraction sont calculables de façon efficace en termes de complexité de calcul. Un exemple d'un tel groupe est par exemple une courbe d'Edwards.

Cette opération de multiplication par un scalaire est par exemple utilisée lors du chiffrement d'une donnée, le scalaire k étant la clef de chiffrement, et est réalisée par exemple par l'exécution d'un algorithme de type "doublement et addition" (en anglais "double-and-add"). Ce type d'algorithme est de type itératif, et balaye les bits du scalaire k du plus significatif au moins significatif, ou inversement, et effectue une opération, sur une valeur courante Q initialement nulle, selon la valeur du bit lu. Une opération, dite de doublement (DBL) est effectuée quelle que soit la valeur du bit lu suivie d'une opération dite d'addition (ADD) uniquement dans le cas où le bit lu est non nul.

Dans le cas où la courbe (E) est une courbe de Koblitz, ayant la forme :

[Math 2]

$$E := \{(x, y) \in K \times K : \boldsymbol{y^2 + xy = x^3 + ax^2 + 1}\}$$

avec $a \in \{0, 1\}$, l'opération de doublement (DBL) est généralement remplacée par une opération de Frobenius. Une opération de Frobenius présente l'avantage, par rapport à une opération de doublement usuelle, d'être plus rapide et moins couteuse à exécuter.

Lors de l'exécution d'un algorithme de type doublement et addition, le profil de la consommation électrique du dispositif 100 diffère selon que l'opération exécutée soit une opération de doublement ou une opération d'addition. Une attaque par analyse de la consommation peut alors permettre à un attaquant de déduire la valeur, bit par bit, du scalaire k associé à la multiplication. Dans des modes de réalisation, le scalaire k est une clef de chiffrement, qui devrait donc rester secret.

Dans des modes de réalisation, le scalaire est un entier et est recodé en forme non adjacente (NAF, de l'anglais "non-adjacent form"). La représentation NAF se base sur une représentation en chiffres signés (-1, 0 et 1) de l'entier. Les bits lus lors de l'exécution de l'algorithme ne sont alors pas des bits à proprement parler car leur valeur n'est pas restreinte à 0 ou 1. Sous la représentation NAF, le produit de deux chiffres (« bits ») consécutifs est nul, c'est-à-dire que chaque chiffre 1 ou -1 est précédé et suivi d'un chiffre 0. Un avantage avec la représentation NAF est qu'elle permet de réduire le nombre d'opérations d'addition à effectuer car la proportion de chiffres non nuls est d'en moyenne un tiers, contre un demi en représentation binaire.

Dans d'autres modes de réalisation, le scalaire est recodé en forme non adjacente fenestré de paramètre w (NAFw, de l'anglais "non-adjacent form"), où le paramètre w est un entier supérieur ou égal à 2. La représentation NAFw de paramètre 2 correspond à la représentation NAF. Sous forme NAFw, les chiffres codant le scalaire sont à valeurs dans $\{-2^{w-1}, \ldots, 2^{w-1}\} \cup \{0\}$. De plus, pour chaque groupe de w chiffres consécutifs, au plus un unique chiffre est non nul. La représentation NAFw de paramètre w supérieur ou égal à 2 a pour avantage de réduire le nombre de chiffres non nuls codant le scalaire, et par conséquent de réduire le nombre d'opérations d'addition à effectuer lors d'une multiplication.

Dans le cas de remplacement de l'opération de doublement par une opération de Frobenius, les mentions ci-dessus de forme « non adjacente NAF » et « non adjacente fenestré NAFw » sont à comprendre comme forme non adjacente T-adique et forme non adjacente fenestré T-adique.

La figure 2 est un graphique illustrant un exemple de consommation électrique du dispositif 100 illustré en figure 1 lors d'une opération cryptographique sans mise en œuvre d'une protection de la clef de chiffrement.

Le graphique de la figure 2 illustre un exemple de l'évolution de la consommation électrique (axe des ordonnées, W) en fonction du temps (axe des abscisses, t) lors de l'exécution d'un algorithme de type doublement et addition appliqué à un point P d'une courbe elliptique et un scalaire k sous forme NAF. L'évolution de la consommation comporte une suite composée de deux motifs 200 et 201 correspondant respectivement à l'exécution d'une opération de doublement (DBL) et d'une opération d'addition (ADD).

Dans l'exemple illustré par la figure 2, des opérations de doublement (DBL), identifiables par le motif 200, ont lieu entre des instants t0 et t1, t2 et t3, t3 et t4, t4 et t5, t6 et t7 puis t8 et t9. Des opérations d'addition (ADD), identifiables par le motif 201, ont lieu entre les instants t1 et t2, t5 et t6 puis t7 et t8. Lorsqu'une opération de doublement (DBL) est suivie d'une opération d'addition (ADD), ces deux opérations correspondent à un chiffre non nul (1 ou -1) dans la représentation NAF du scalaire (k). Au contraire lorsqu'une opération de doublement (DBL) est suivie d'une autre opération de doublement, la première opération de doublement correspond à un chiffre nul dans la représentation NAF du scalaire (k).

Comme illustré par les variations de consommation dans la figure 2, il est possible pour un attaquant d'en déduire les opérations effectuées, et donc les valeurs de la clé.

Selon un mode de réalisation et dans le but de rendre le profil de la consommation électrique du dispositif 100 difficilement exploitable lors d'une attaque, des opérations factices sont insérées dans la suite d'opérations. Une opération factice consiste en l'exécution, par exemple par le coprocesseur cryptographique 104, d'une ou plusieurs opérations de doublement et/ou d'addition sans que ces opérations ne modifient réellement la valeur courante Q.

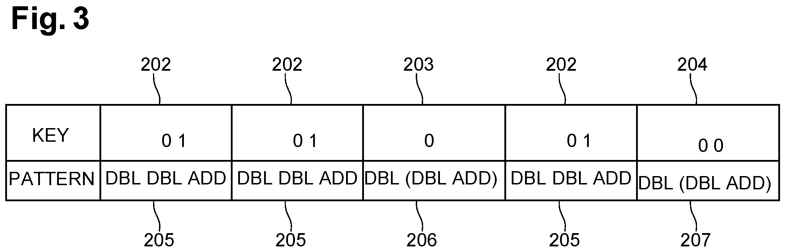

La figure 3 est un tableau présentant un exemple d'insertion d'opérations cryptographiques factices. Dans l'exemple de la figure 3, le scalaire (KEY) est représenté sous forme NAF. Sous cette représentation, un chiffre non nul est toujours précédé et suivi d'un chiffre nul. Dans l'exemple de la figure 3, des opérations factices sont insérées de sorte que la séquence (PATTERN) d'opérations, et donc le profil de consommation par séquence d'opérations, soit toujours le même. La séquence est une suite de deux opérations de doublement (DBL) et d'une addition (ADD). Le scalaire (KEY) est découpé en groupes d'un ou deux chiffres, de sorte que chaque chiffre non nul soit le deuxième chiffre dans un groupe 202 de deux chiffres. Par conséquent, chaque groupe 202 est de la forme (0, 1) ou (0, -1). Afin de pouvoir toujours utiliser la séquence de deux opérations de doublement et d'une addition, certains chiffres nuls 203 sont traités individuellement et d'autres par groupe 204 de deux chiffres nuls. Les opérations (bloc 205) associées aux groupes 202 ne comportent aucune opération factice. Lorsqu'un chiffre nul 203 est traité individuellement, une opération de doublement et une opération d'addition (bloc 206) sont factices. Lorsque deux chiffres nuls sont traités par groupe 204, une opération d'addition (bloc 207) est factice.

Cependant, le découpage du scalaire (KEY) en groupe de chiffre de taille non constante permet à un attaquant connaissant la taille du scalaire (KEY) de déduire le nombre total de chiffres nuls traités individuellement (blocs 203) à partir du nombre de fois que la séquence d'opérations est exécutée.

Des modes de réalisation décrits ci-après permettent de pallier tout ou partie des inconvénients indiqués ci-dessus en effectuant le découpage du scalaire k en groupes composés d'un même nombre de chiffres.

Par exemple, le scalaire k est sous forme NAF et est découpé en une pluralité de groupes de deux chiffres. Pour ce cas précis, le tableau suivant résume, selon les valeurs des chiffres du groupe considéré, un exemple de la séquence d'opérations non protégée, c'est-à-dire la séquence d'opérations exécutée sans insertion d'opérations factices, et la séquence protégée d'opérations, c'est-à-dire, la séquence d'opérations exécutées avec insertion d'opérations factices selon les modes de réalisation décrits afin d'avoir toujours la même séquence d'opérations. Les opérations factices sont indiquées entre parenthèses.

[Table 1]

| Paires possibles de chiffres | (0, 0) | (0, $\pm 1$) | ($\pm 1$, 0) |
|---|---|---|---|
| Séquence non protégée d'opérations | DBL DBL | DBL DBL ADD | DBL ADD DBL |
| Séquence protégée d'opérations (avec opérations factices) | DBL (DBL) (ADD) DBL | DBL DBL ADD (DBL) | DBL (DBL) ADD DBL |

D'autres séquences protégées d'opération sont envisageables. A titre d'exemple, dans le cas de la paire de chiffre (0, 0) il est possible de rendre factice l'opération d'addition (ADD) et la dernière opération de doublement (DBL), ou encore de rendre factice la première opération de doublement (DBL) ainsi que l'opération d'addition (ADD).

Selon un mode de réalisation, pour chaque paire de chiffres, au maximum deux opérations factices sont insérées. En moyenne, une addition sur trois est factice, et exactement un doublement sur trois est factice.

Selon un mode de réalisation, les opérations de doublement (DBL) sont remplacées par des opérations de Frobenius $\tau$ lorsque la courbe elliptique considérée est une courbe de Koblitz. Dans ce cas, les séquences d'opérations sont, par exemple, celles indiquées dans le tableau suivant dans lequel les opérations factices sont indiquées entre parenthèses :

[Table 2]

| Paires possibles de chiffres | (0, 0) | (0, $\pm 1$) | ($\pm 1$, 0) |
|---|---|---|---|
| Séquence protégée d'opérations | $\tau$ ($\tau$) (ADD) $\tau$ | $\tau$ $\tau$ ADD ($\tau$) | $\tau$ ($\tau$) ADD $\tau$ |

Selon un autre mode de réalisation, les opérations de doublement (DBL) sont remplacées par une quelconque opération unitaire sur un point, pourvu que cette opération permette la multiplication du point selon l'algorithme de « doublement et addition » où le doublement est remplacé par l'opération en question et éventuellement après avoir converti le scalaire k en une représentation appropriée.

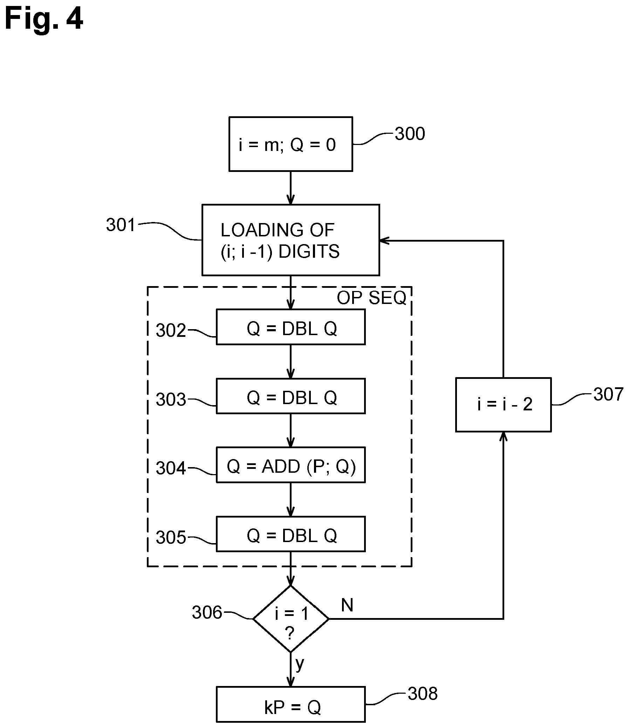

La figure 4 est un organigramme illustrant des opérations d'un procédé de mise en œuvre d'un exemple d'une opération cryptographique selon un mode de réalisation. A titre d'exemple, le procédé est mis en œuvre par le coprocesseur cryptographique 104 du dispositif 100.

Plus particulièrement, l'opération cryptographique est une multiplication d'un point P d'une courbe elliptique E par un scalaire k sous forme NAF. L'exemple de la figure 4 est basé sur des opérations de doublement, et le scalaire k est sous forme NAF et est découpé en une pluralité de groupes de deux chiffres.

Dans une étape 300 (i=m ; Q=0), des variables de l'algorithme sont par exemple initialisées. Une valeur courante Q est initialisée à 0 et une valeur d'incrémentation i est initialisée à la valeur m, m étant par exemple le rang du chiffre le plus représentatif d'un scalaire k. Dans cet exemple, le rang du chiffre le moins représentatif est la valeur 0 mais il est possible de considérer que la valeur du rang du chiffre le moins représentatif est 1, ou toute autre valeur.

Dans une étape 301 (LOADING OF (i, i-1) DIGITS), postérieure à l'étape 300, les deux chiffres de rang i et i-1 sont chargés, par exemple par le coprocesseur cryptographique 104, puis sont lus. Cela permet au coprocesseur cryptographique 104, ou au processeur 102 de déterminer, quelles seront les opérations factices à effectuer.

Dans des étapes 302 à 305, une séquence d'opérations (OP SEQ) est exécutée comprenant, dans l'exemple de la figure 4, des opérations de doublement ou d'addition effectuées sur la valeur courante Q. La valeur courante Q est par exemple stockée dans un registre (non-illustré) du coprocesseur cryptographique 104 du dispositif 100 de la figure 1. Les étapes 302, 303 et 305 (Q=DBL Q) consistent en des opérations de doublement consistant à additionner la valeur courante Q à elle-même. L'étape 304 (Q=ADD(P;Q)) consiste en une opération d'addition consistant à ajouter le point P de la courbe E à la valeur courante Q. Lors des étapes 302 à 305, la valeur courante Q stockée dans le registre est par exemple modifiée uniquement si l'opération de doublement ou d'addition n'est pas factice. Dans le cas d'une opération factice, l'opération est par exemple exécutée, mais le contenu du registre n'est pas modifié. Dans un autre mode de réalisation, l'opération factice consiste à modifier la valeur courante Q stockée dans le registre, sans impacter les opérations suivantes. Par exemple, la valeur courante Q est modifiée de manière à ce que la nouvelle valeur soit une représentation différente mais mathématiquement équivalente de la valeur courante Q.

A titre d'exemple, le coprocesseur cryptographique 104 vérifie dans une étape 306 (i=1 ?), postérieure à l'étape 305, si la valeur i vaut 1. Lorsque la valeur i vaut 1 (branche Y), tous les chiffres codant le scalaire k ont été lus et le procédé se termine. La valeur courante Q stockée est le résultat de la multiplication du point P par le scalaire k (kP=Q, 308). Lorsque la valeur i est différente de 1 (branche N), elle est décrémentée de deux unités (i=i-2, 307). Par exemple lorsque la valeur i vaut la valeur initiale m, une fois les étapes 302 à 305 effectuées, la valeur i passe de la valeur m à la valeur m-2 dans l'étape 307. Suite à l'étape 307, le procédé reprend à l'étape 302, avec les nouvelles valeur i et Q.

Bien que la figure 4 illustre un procédé dans lequel les chiffres du scalaire k sont parcourus du chiffre le plus

**EP 4 152 682 B1**

significatif au chiffre le moins significatif. Dans d'autres modes de réalisation, les chiffres du scalaire k sont parcourus du chiffre le moins significatif au chiffre le plus significatif. Par exemple, dans le cas de représentation NAF et NAFw, le traitement des chiffres est inversé. Les chiffres sont alors considérés par paires ou groupes de forme (i-w+1, ..., i). L'opération de doublement DBL change alors de cible et effectue P=DBL(P). L'ordre des opérations 302 à 305 est alors inversé.

Lorsque le scalaire k est codé sous forme NAFw de paramètre w supérieur ou égal à 3, les chiffres codant le scalaire k sont lus par groupe de taille w.

Le procédé consiste alors à exécuter consécutivement w opérations de doublement, puis une opération d'addition puis (w-1) opérations de doublement, indépendamment de la valeur des chiffres composant le groupe. Certaines (w-1 ou w) de ces opérations sont factices. A titre d'exemple, pour un groupe de w chiffres nuls, l'opération d'addition et w-1 opérations de doublement sont factices, par exemple, les w-1 premières opérations de doublement sont factices.

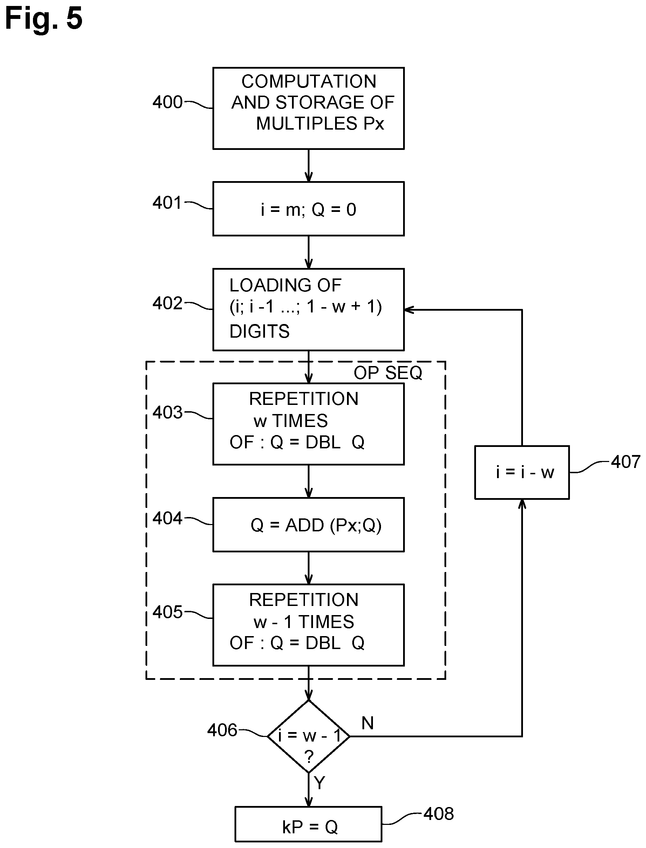

La figure 5 est un organigramme illustrant des opérations d'un procédé de mise en œuvre d'un exemple d'opération cryptographique selon un autre mode de réalisation.

Plus particulièrement, l'opération cryptographique est une multiplication d'un point P d'une courbe elliptique E par un scalaire k sous forme NAFw de paramètre w supérieur ou égal à 3.

Le procédé débute dans une étape 400 (COMPUTATION AND STORAGE OF MULTIPLES Px) dans laquelle une pluralité de multiples Px, x étant un entier non nul, du point P est calculée, par exemple par le coprocesseur cryptographique 104 et suivant un procédé arbitraire, et est stockée dans une mémoire du dispositif 100. Par exemple, la pluralité de multiples contient $(2^{w-1}-1)$ multiples du point P. Dans d'autres modes de réalisation, la pluralité de multiples Px est déjà présente dans la mémoire 106 du dispositif 100 et l'étape 400 est alors omise. Par exemple, si le point P est constant, les multiples Px sont par exemple stockés de façon non-volatile, par exemple dans la mémoire 106 si cette mémoire est une mémoire non volatile, ou dans une autre mémoire. Si le point P n'est pas constant, les multiples Px sont par exemple calculés soit à chaque multiplication, soit uniquement lorsque le point P a changé depuis la dernière multiplication et sont stockés dans une mémoire volatile ou dans une mémoire non volatile.

Une étape 401 (i=m ; Q=0) est la même étape d'initialisation de l'algorithme que l'étape 300 de la figure 4.

Dans une étape 402 (LOADING OF (i, i-1, ..., i-w+1) DIGITS) les w chiffres de rangs i à i-w+1 sont chargés, par exemple par le coprocesseur cryptographique 104, puis sont lus. Cela permet, par exemple au coprocesseur cryptographique 104, de déterminer quelles seront les opérations factices à effectuer.

Dans des étapes 403 à 405 une séquence d'opérations (OP SEQ) comprenant des opérations de doublement (DBL) et d'addition (ADD) est effectuée sur la valeur courante Q.

Dans l'étape 403 (REPETITION OF w TIMES Q=DBL Q), postérieure à l'étape 402, une succession de w opérations de doublement (DBL) est effectuée, par exemple par le coprocesseur cryptographique (104), sur la valeur courante Q. Certaines de ces opérations sont factices et suite à leur exécution, la valeur courante Q, par exemple stockée dans un registre du dispositif 100, n'est pas modifiée ou est modifiée en une représentation mathématiquement équivalente.

Dans l'étape 404 (Q= ADD(Px,Q)), postérieure à l'étape 403, une opération d'addition est exécutée sur la valeur courante Q. Dans le cas où cette opération est factice, suite à son exécution, la valeur courante Q, par exemple stockée dans un registre du dispositif 100, n'est pas modifiée ou est modifiée en une représentation mathématiquement équivalente. L'opération d'addition est factice uniquement dans le cas où les w chiffres du groupe de chiffres sont tous de valeur nulle.

Dans l'étape 405 (REPETITION OF w-1 TIMES Q=DBL Q), postérieure à l'étape 404, une succession de (w-1) opérations de doublement (DBL) est effectuée, par exemple par le coprocesseur cryptographique (104), sur la valeur courante Q. Certaines de ces opérations sont factices, suite à leur exécution, la valeur courante Q, par exemple stockée dans le registre du dispositif 100, n'est pas modifiée ou est modifiée en une représentation mathématiquement équivalente.

A titre d'exemple, le coprocesseur cryptographique 104 vérifie dans une étape 406 (i=w-1 ?), postérieure à l'étape 405, si la valeur i vaut (w-1). Lorsque la valeur i vaut (w-1) (branche Y), tous les chiffres codant le scalaire k ont été lus et le procédé se termine. La valeur courante Q stockée dans le registre est le résultat de la multiplication du point P par le scalaire k (kP=Q, 408). Lorsque la valeur i est différente de w-1 (branche N), elle est décrémentée de w unités (i=i-w, 407). Par exemple lorsque la valeur i vaut la valeur initiale m, une fois les étapes 403 à 405 effectuées, la valeur i passe de la valeur m à la valeur m-w dans l'étape 407. Suite à l'étape 407, le procédé reprend à l'étape 402, avec les nouvelles valeurs courantes i et Q.

Selon un mode de réalisation, le dispositif 100 contient une mémoire volatile ou non volatile de taille suffisante pour le stockage des multiples du point P calculés lors de l'étape 400.

Selon un mode de réalisation, les opérations de doublement (DBL) sont remplacées par des opérations de Frobenius lorsque la courbe elliptique considérée est une courbe de Koblitz.

Selon un mode de réalisation, pour chaque groupe de w chiffres, au maximum w opérations factices sont

8

insérées. En moyenne, une opération d'addition sur w+1 est factice, et exactement w-1 opérations de doublement sur 2w-1 sont factices.

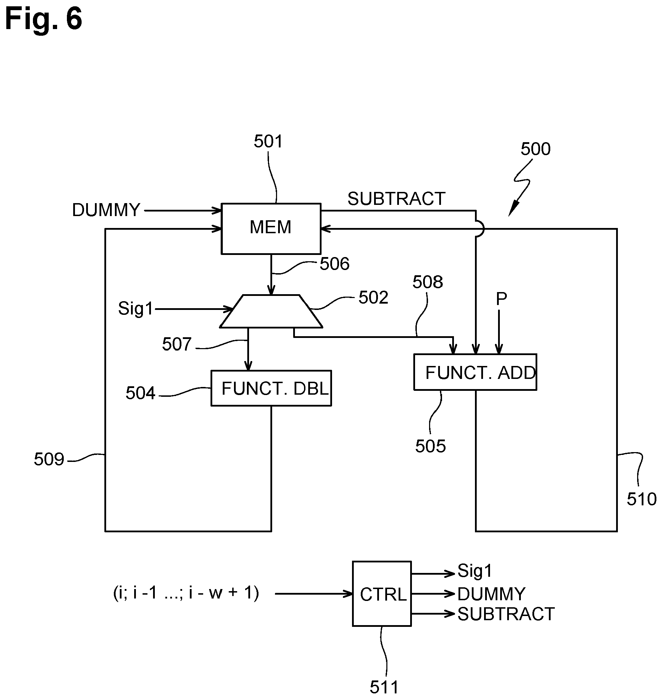

La figure 6 représente de façon schématique un circuit de calcul 500, par exemple contenu dans le coprocesseur cryptographique 104, selon un mode de réalisation.

Le circuit de calcul 500 comprend une mémoire 501 (MEM). La mémoire 501 est par exemple un registre dans lequel est stockée la valeur courante Q.

La mémoire 501 transmet la valeur courante Q par l'intermédiaire d'un bus de données 506 à un démultiplexeur 502. Le démultiplexeur 502 est commandé par un signal Sig1. En fonction de la valeur du signal Sig1, la valeur courante Q est envoyée soit sur un bus de données 507, soit sur un autre bus de données 508.

Le bus 507 transmet la valeur courante Q à une suite d'opérateurs arithmétiques et logiques 504 (FUNCT. DBL) mettant en œuvre l'opération de doublement ou l'opération de Frobenius si la courbe elliptique considérée est une courbe de Koblitz, de la valeur courante Q. Cette suite d'opérations met par exemple en jeu le stockage de valeurs intermédiaires nécessaires au calcul, par exemple dans des registres temporaires non représentés.

Le circuit de calcul 500 comprend en outre un circuit de commande 511 (CTRL).

La valeur courante Q est transmise, par l'intermédiaire d'un bus 508, à un additionneur de points 505 (FUNCT. ADD). L'additionneur de points 505 permet la mise en œuvre de l'opération d'addition décrite en relation avec les figures 3 et 4 sur la valeur courante Q. L'additionneur de points 505 met par exemple en jeu le stockage de valeurs intermédiaires nécessaires au calcul, par exemple dans les registres temporaires. Dans certains cas, un ou plusieurs des multiples Px peuvent être négatifs et l'opération peut être réalisée par une soustraction de la valeur opposée de Px à la valeur courante Q. Afin d'effectuer des soustractions, soit l'additionneur de points 505 est configuré pour effectuer des opérations de soustraction de points sur la commande d'un signal SUBTRACT fourni par le circuit de commande 511, soit un soustracteur est ajouté en parallèle avec l'additionneur de points et l'opérateur de doublement 504.

L'opérateur de doublement 504 et l'additionneur de points 505 sont reliés à la mémoire 501, respectivement, par l'intermédiaire de bus de données 509 et 510.

L'écrasement de la valeur Q stockée préalablement dans la mémoire 501 est contrôlé, par exemple, par un signal DUMMY. A titre d'exemple, lorsque l'opération préalablement effectuée sur la valeur courante Q est factice, le signal DUMMY commande le maintien de l'ancienne valeur Q stockée dans la mémoire 501 et lorsque l'opération préalablement effectuée n'est pas factice, le signal DUMMY commande l'écrasement de l'ancienne valeur Q stockée et le stockage de la nouvelle valeur courante Q.

Selon un autre mode de réalisation, au lieu de modifier l'opération d'écriture, le signal DUMMY contrôle le fonctionnement de l'opérateur de doublement 504 et/ou de l'additionneur de points 505 afin de rendre leur effet nul.

Le circuit de commande 511 (CTRL) est par exemple configuré pour générer et émettre les signaux Sig1 et DUMMY, par exemple en fonction des chiffres du scalaire k d'indices (i, i+1, ..., i-w+1). Dans le cas d'un traitement par représentation fenestré NAFw de paramètre supérieur à 2, le circuit de contrôle 511 génère en outre une adresse de la mémoire 501 à laquelle est stockée un des points précalculés utilisé pour le calcul en cours, ce point étant par exemple le multiple Px ou son opposé.

Un avantage des modes de réalisation décrits est qu'ils rendent plus difficilement exploitable toute analyse de consommation. Effet, en découpant un scalaire en une pluralité de groupes composés d'un même nombre de chiffres, et en exécutant, pour chaque groupe de chiffres, une même séquence d'opérations, le profil de consommation électrique pour chaque séquence reste le même, indépendamment des caractéristiques de la clé.

Un autre avantage des modes de réalisation décrits, est que peu d'opérations d'addition factices sont effectuées. Par exemple, en représentation NAF, seule une addition sur trois en moyenne est factice. De même, peu d'opérations de doublement factices sont effectuées. Par exemple, en représentation NAF, une opération de doublement sur trois est factice. Dans le cas des courbes de Koblitz, les opérations de doublement sont remplacées par des opérations de Frobenius qui sont peu couteuses en temps d'exécution.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, d'autres configurations de circuits de calcul que le circuit présenté en figure 6 permettent la mise en œuvre des procédés décrits en relation avec les figures 4 et 5.

Enfin, la mise en œuvre pratique des modes de réalisation et variantes décrits est à la portée de la personne du métier à partir des indications fonctionnelles données ci-dessus. En particulier, pour ce qui est de l'insertion des opérations factices.

## Revendications

1. Procédé cryptographique comprenant :

la multiplication d'un point (P), appartenant à un ensemble mathématique ayant une structure de groupe, par un scalaire (k) en faisant :

- le découpage d'un scalaire (k) en une pluralité de groupes composés d'un même nombre w de chiffres, w étant supérieur ou égal à 2 ; et
- l'exécution, par un circuit cryptographique (104) et pour chaque groupe de chiffres, d'une séquence d'opérations sur le point (P), la séquence d'opérations étant identique pour chaque groupe de chiffres, au moins une des opérations exécutées pour chacun des groupes de chiffres étant une opération factice,

la séquence d'opérations consistant en :

a) l'exécution, w fois, d'une opération de doublement (DBL) ;
b) l'exécution d'une opération d'addition (ADD) ; et
c) l'exécution, (w-1) fois, de l'opération de doublement (DBL) .

2. Circuit cryptographique (104) pour réaliser une multiplication d'un point (P), appartenant à un ensemble mathématique ayant une structure de groupe, par un scalaire (k), le circuit cryptographique étant configuré pour :

- découper le scalaire (k) en une pluralité de groupes composés d'un même nombre w de chiffres, w étant supérieur ou égal à 2 ;
- exécuter, pour chaque groupe de chiffres, une séquence d'opérations au point (P), la séquence d'opérations étant identique pour chaque groupe de chiffres, au moins une des opérations exécutées pour chacun des groupes de chiffres étant une opération factice,

la séquence d'opérations consistant en :

a) l'exécution, w fois, d'une opération de doublement (DBL) ;
b) l'exécution d'une opération d'addition (ADD) ; et
c) l'exécution, (w-1) fois, de l'opération de doublement (DBL) .

3. Procédé selon la revendication 1, ou circuit selon la revendication 2, dans lequel la séquence d'opérations consiste en l'opération a) suivie par l'opération b) suivie par l'opération c).

4. Procédé selon l'une quelconque des revendications 1 ou 3, ou circuit selon la revendication 2 ou 3, dans lequel le circuit cryptographique (104) est configuré pour modifier une valeur courante (Q) d'un résultat intermédiaire de la multiplication suite à chaque opération non factice et pour ne pas modifier cette valeur courante suite à chaque opération factice.

5. Procédé selon la revendication 1 ou 3, ou circuit selon la revendication 2 ou 3, dans lequel, pour chaque opération factice, le circuit cryptographique (104) est configuré pour modifier une valeur courante (Q) d'un résultat intermédiaire de la multiplication en une valeur différente mais mathématiquement équivalente.

6. Procédé selon l'une quelconque des revendications 1, 3 à 5, ou circuit selon l'une quelconque des revendications 2 à 5, comprenant en outre, avant le découpage en une pluralité de groupes de chiffres, le recodage du scalaire (k) sous une forme non adjacente fenestrée de paramètre w (NAFw).

7. Procédé selon l'une quelconque des revendications 1, 3 à 6, ou circuit selon l'une quelconque des revendications 2 à 6, dans lequel l'ensemble mathématique est une courbe elliptique (E) ou une courbe hyperelliptique.

8. Procédé ou circuit selon la revendication 7, dans lequel la courbe (E) est une courbe de Koblitz définie par un ensemble de points et ayant la forme suivante :

[Math 1]

$$\{(x, y) \in K \times K : \ y^2 + xy = x^3 + ax^2 + 1\}$$

où $a$ vaut 0 ou 1 et $K$ est un corps fini binaire.

**9.** Procédé ou circuit selon la revendication 8, dans lequel l'opération de doublement (DBL) est un endomorphisme de Frobenius.

**10.** Procédé selon l'une quelconque des revendications 1, 3 à 9, ou circuit selon l'une quelconque des revendications 2 à 9, comprenant en outre, avant l'exécution de la séquence d'opérations sur le point (P), le calcul et le stockage dans une mémoire du circuit d'une pluralité de multiples dudit point (P).

**11.** Mémoire non transitoire (106) stockant des instructions pour la mise en œuvre du procédé selon l'une quelconque des revendications 1, 3 à 10 lorsque ces instructions sont exécutées par un processeur cryptographique (104).

**12.** Dispositif électronique (100) comprenant un circuit cryptographique (104) configuré pour la mise en œuvre du procédé selon l'une quelconque des revendications 1, 3 à 10.

**Patentansprüche**

**1.** Ein kryptographisches Verfahren, das Folgendes aufweist:

Multiplizieren eines Punktes (P), der zu einem mathematischen Satz mit einer Gruppenstruktur gehört, mit einem Skalar (k) durch Ausführen von:

- der Division eines Skalars (k) in eine Vielzahl von Gruppen, die aus einer gleichen Anzahl w von Ziffern gebildet sind, wobei w größer oder gleich 2 ist; und
- die Ausführung, durch eine kryptografische Schaltung (104) und für jede Gruppe von Ziffern, einer Folge von Operationen auf den Punkt (P), wobei die Folge von Operationen für jede Gruppe von Ziffern identisch ist, wobei wenigstens eine der Operationen, die für jede der Gruppen von Ziffern ausgeführt werden, eine Dummy-Operation ist,

wobei die Folge von Operationen aus Folgendem besteht:

a) der w-maligen Ausführung einer Doppeloperation (DBL);
b) der Ausführung einer Additionsoperation (ADD); und
c) der (w-1)-maligen Ausführung der Doppeloperation.

**2.** Eine kryptografische Schaltung (104) zum Durchführen einer Multiplikation eines Punktes (P), der zu einem mathematischen Satz mit einer Gruppenstruktur gehört, mit einem Skalar (k), wobei die kryptografische Schaltung konfiguriert ist, zum:

- Teilen eines Skalars (k) in eine Vielzahl von Gruppen, die aus einer gleichen Anzahl w von Ziffern gebildet werden, wobei w größer oder gleich 2 ist;
- Ausführen, für jede Gruppe von Ziffern, einer Folge von Operationen an dem Punkt (P), wobei die Folge von Operationen für jede Gruppe von Ziffern identisch ist, wobei wenigstens eine der Operationen, die für jede der Gruppen von Ziffern ausgeführt werden, eine Dummy-Operation ist,

wobei die Folge von Operationen aus Folgendem besteht:

a) der w-maligen Ausführung einer Doppeloperation (DBL);
b) der Ausführung einer Additionsoperation (ADD); und
c) der (w-1)-maligen Ausführung der Doppeloperation.

**3.** Das Verfahren nach Anspruch 1 oder die Schaltung nach Anspruch 2, wobei die Folge von Operationen aus der Operation a) gefolgt von der Operation b) gefolgt von der Operation c) besteht.

**4.** Das Verfahren nach einem der Ansprüche 1 oder 3 oder die Schaltung nach Anspruch 2 oder 3, wobei die kryptografische Schaltung (104) konfiguriert ist zum Modifizieren eines aktuellen Werts (Q) eines Zwischenergebnisses der Multiplikation nach jeder Nicht-Dummy-Operation und zum Nicht-Modifizieren dieses aktuellen Werts nach jeder Dummy-Operation.

**5.** Das Verfahren nach Anspruch 1 oder 3 oder die Schaltung nach Anspruch 2 oder 3, wobei die kryptografische Schaltung (104) für jede Dummy-Operation konfiguriert ist zum Modifizieren eines aktuellen Werts (Q) eines Zwischenergebnisses der Multiplikation zu einem anderen, aber mathematisch äquivalenten Wert.

**6.** Das Verfahren nach einem der Ansprüche 1, 3 bis 5 oder die Schaltung nach einem der Ansprüche 2 bis 5, ferner aufweisend, vor der Aufteilung in eine Vielzahl von Gruppen von Ziffern, die Neucodierung des Skalars (k) in einer nicht benachbarten Fensterform eines Parameters w(NAFw).

**7.** Das Verfahren nach einem der Ansprüche 1, 3 bis 6 oder die Schaltung nach einem der Ansprüche 2 bis 6, wobei der mathematische Satz eine elliptische Kurve (E) oder eine hyperelliptische Kurve ist.

**8.** Das Verfahren oder die Schaltung nach Anspruch 7, wobei die Kurve (E) eine Koblitz-Kurve ist, die durch einen Satz von Punkten definiert ist und die folgende Form hat:

[Math 1]  $$\{(x, y) \in K \times K : y^2 + xy = x^3 + ax^2 + 1\}$$

wobei a gleich 0 oder 1 ist und K ein endlicher binärer Körper ist.

**9.** Das Verfahren oder Schaltung nach Anspruch 8, wobei die Doppeloperation (DBL) ein Frobenius-Endomorphismus ist.

**10.** Das Verfahren nach einem der Ansprüche 1, 3 bis 9 oder die Schaltung nach einem der Ansprüche 2 bis 9, ferner aufweisend, vor der Ausführung der Operationssequenz an Punkt (P), die Berechnung und die Speicherung in einem Speicher der Schaltung einer Vielzahl von Vielfachen des Punktes (P).

**11.** Ein nichtflüchtiger Speicher (106), der Anweisungen zur Implementierung des Verfahrens nach einem der Ansprüche 1 oder 3 bis 10 speichert, wenn diese Anweisungen von einem kryptografischen Prozessor (104) ausgeführt werden.

**12.** Ein elektronisches Gerät (100), aufweisend eine kryptografische Schaltung (104), die konfiguriert ist zum Implementieren des Verfahrens nach einem der Ansprüche 1, 3 bis 10.

**Claims**

**1.** A cryptographic method comprising:

multiplying a point (P), belonging to a mathematical set with a group structure, by a scalar (k) by performing:

- the division of a scalar (k) into a plurality of groups formed of a same number w of digits, w being greater than or equal to 2; and
- the execution, by a cryptographic circuit (104) and for each group of digits, of a sequence of operations on point (P), the sequence of operations being identical for each group of digits, at least one of the operations executed for each of the groups of digits being a dummy operation,

the sequence of operations consisting in:

a) the execution, w times, of a double operation (DBL);
b) the execution of an add operation (ADD); and
c) the execution, (w-1) times, of the double operation.

**2.** A cryptographic circuit (104) for performing a multiplication of a point (P), belonging to a mathematical set with a group structure, by a scalar (k), the cryptographic circuit being configured to:

- divide a scalar (k) into a plurality of groups formed of a same number w of digits, w being greater than or equal to 2;
- executing, for each group of digits, a sequence of operations on point (P), the sequence of operations being identical for each group of digits, at least one of the operations executed for each of the groups of digits being a dummy operation,

the sequence of operations consisting in:

 a) the execution, w times, of a double operation (DBL);
 b) the execution of an add operation (ADD); and
 c) the execution, (w-1) times, of the double operation.

**3.** The method according to claim 1, or circuit according to claim 2, wherein the sequence of operations consists in the operation a) followed by the operation b) followed by the operation c).

**4.** The method according to any of claims 1 or 3, or circuit according to claim 2 or 3, wherein the cryptographic circuit (104) is configured to modify a current value (Q) of an intermediate result of the multiplication after each non-dummy operation and to not modify this current value after each dummy operation.

**5.** The method according to claim 1 or 3, or circuit according to claim 2 or 3, wherein, for each dummy operation, the cryptographic circuit (104) is configured to modify a current value (Q) of an intermediate result of the multiplication to be a different but mathematically equivalent value.

**6.** The method according to any of claims 1, 3 to 5, or circuit according to any of claims 2 to 5, further comprising, before the division into a plurality of groups of digits, the re-encoding of the scalar (k) in non-adjacent windowed form of parameter w(NAFw).

**7.** The method according to any of claims 1, 3 to 6, or circuit according to any of claims 2 to 6, wherein the mathematical set is an elliptic curve (E) or an hyperelliptic curve.

**8.** The method or circuit according to claim 7, wherein the curve (E) is a Koblitz curve defined by a set of points and having the following form:

[Math 1]

$$\{(x, y) \in K \times K : y^2 + xy = x^3 + ax^2 + 1\}$$

where ***a*** is equal to 0 or 1 and ***K*** is a finite binary body.

**9.** The method or circuit according to claim 8, wherein the double operation (DBL) is a Frobenius endomorphism.

**10.** The method according to any of claims 1, 3 to 9 or circuit according to any of claims 2 to 9, further comprising, before the execution of the operation sequence on point (P), the calculation and the storage into a memory of the circuit of a plurality of multiples of said point (P).

**11.** A non-transient memory (106) storing instructions for the implementation of the method according to any of claims 1 or 3 to 10 when these instructions are executed by a cryptographic processor (104).

**12.** An Electronic device (100) comprising a cryptographic circuit (104) configured to implement the method according to any of claims 1, 3 to 10.

# Fig. 1

# Fig. 2

EP 4 152 682 B1

**Fig. 3**

| | 202 | 202 | 203 | 202 | 204 |
| KEY | 0 1 | 0 1 | 0 | 0 1 | 0 0 |
| PATTERN | DBL DBL ADD | DBL DBL ADD | DBL (DBL ADD) | DBL DBL ADD | DBL (DBL ADD) |
| | 205 | 205 | 206 | 205 | 207 |

# Fig. 4

i = m; Q = 0    — 300

301 — LOADING OF
(i; i -1) DIGITS

OP SEQ

302 — Q = DBL Q

303 — Q = DBL Q

304 — Q = ADD (P; Q)

305 — Q = DBL Q

306 — i = 1 ?    N

i = i - 2    — 307

y

kP = Q    — 308

# Fig. 5

COMPUTATION AND STORAGE OF MULTIPLES Px — 400

i = m; Q = 0 — 401

LOADING OF (i; i -1 ...; 1 - w + 1) DIGITS — 402

OP SEQ

REPETITION w TIMES OF : Q = DBL  Q — 403

Q = ADD (Px;Q) — 404

REPETITION w - 1 TIMES OF : Q = DBL  Q — 405

i = w - 1 ? — 406

i = i - w — 407

kP = Q — 408

# Fig. 6

## RÉFÉRENCES CITÉES DANS LA DESCRIPTION

**Documents brevets cités dans la description**

- US 2012008780 A

**Littérature non-brevet citée dans la description**

- An Elliptic Curve Crypto-Processor Secured by Randomized Windows. **PONTIE et al.** 17TH EUROMICRO CONFERENCE ON DIGITAL SYSTEM DESIGN. IEEE, 27 August 2014
- **LARS ELMEGAARD-FESSEL**. *Efficient Scalar Multiplication and Security against Power Analysis in Cryptosystems based on the NIST Elliptic Curves Over Prime Fields*, 01 August 2006
- New Regular Radix-8 Scheme for Elliptic Curve Scalar Multiplication without Pre-Computation. **ABDULRAHMAN EBRAHIM A H et al.** IEEE TRANSACTIONS ON COMPUTERS. IEEE, 01 February 2015